# EUROPEAN PATENT SPECIFICATION

(11) **EP 4 174 398 B1**
(45) Date of publication and mention of the grant of the patent: **27.08.2025**
(21) Application number: 22203375.5
(22) Date of filing: 24.10.2022
(51) Int. Cl.: F24F 13/32, F16M 13/02, F16L 3/22

(54) **A SUPPORT BRACKET FOR EQUIPMENT, IN PARTICULAR UNITS FOR AIR-CONDITIONING PLANTS**
STÜTZKONSOLE FÜR GERÄTE, INSBESONDERE KLIMAANLAGEN
SUPPORT POUR EQUIPEMENTS, EN PARTICULIER POUR INSTALLATIONS DE CLIMATISATION

(30) Priority: 26.10.2021 IT 202100027443
(43) Date of publication of application: 03.05.2023
(73) Proprietor: Aspen Pumps Italia s.r.l., 35030 Bastia di Rovolon / Padova (IT)
(72) Inventor: Cappellari, Dino, 35030 Rubano (PD) (IT)
(74) Representative: Fabris, Stefano

(56) References cited:
- EP-A1- 3 792 567
- EP-A2- 2 369 248
- JP-A- 2006 308 243
- US-A1- 2016 123 625

## Description

### Technical field

The present invention relates to a support bracket for equipment, in particular to units for air-conditioning plants, having the features set out in the preamble of the main claim 1.

The invention particularly, though in a non-exclusive manner, involves the field of bracket-like fixing devices for supporting the exchange groups for air-conditioning plants.

A support bracket having the features outlined above is known from EP 3792567 A1.

### Technological background

In this context, it is known that the heat exchanger groups, which are used in the air-conditioning plants and which supply the diffusors which are provided in the surrounding areas of the buildings to be air-conditioned, have to be arranged and supported outside the buildings or in any case relocated to such a position as to communicate with the exterior.

Furthermore, it is typical that the formation of the buildings requires that these exchangers, in addition to being positioned on terraces and/or roofs, be suspended on the external walls of the buildings or on walls near balconies and windows which are directed towards the exterior of a building so as to allow a suitable heat exchange.

In order to fix these exchangers to the walls, the widespread use of typically L-shaped brackets which have such dimensions as to have suitable robustness is well-known, a pair of these brackets normally being sufficient, which brackets are fixed both directly to the walls and to guides which in turn are fixed to the walls.

These brackets are further provided with openings which define the seats for inserting fixing screws with which the equipment can be secured to the brackets themselves.

A known type provides for the brackets to be made from metal material, wherein each of the bracket portions which form the L-shaped formation is configured with a U-shaped cross-section which is suitable for providing the member of the bracket with adequate resistance to the loads applied.

In brackets of this configuration, the bracket portion which is provided for supporting and fixing the equipment item on the bracket which under operating conditions is arranged horizontally is provided with slotted through-holes, in which the fixing screws are inserted. Typically, these screws are inserted in the elongate holes, with the head of the screw arranged in a position under the bracket so as to engage with the extension pieces or anchoring feet of the equipment, and to allow the locking nut to be screwed from above to the threaded shank of the screw.

One of the limitations encountered in these solutions involves the fact that the locking screws have to be retained in position by the fitter until the locking nut is screwed on, otherwise there is the risk of the screw leaving and consequently falling out. Considering that the anchoring of the equipment items to the bracket is often brought about at significant heights above the ground and in disadvantageous positions for the fitter, the application of the locking screws often complicates the operations of fixing the equipment item to the support bracket.

### Description of the invention

The invention is directed towards these types of brackets and the main object is to provide a support bracket for equipment items, in particular air-conditioning plant units, which is structurally and functionally configured to overcome the limitations set out and so as to make the steps of anchoring the equipment items to the support brackets simple, rapid and convenient for the fitter.

This object and other objects which will be clearly appreciated below are achieved by the invention by means of a support bracket of the above-mentioned type, which has the features of the appended independent claim 1. The dependent claims relate to features of preferred embodiments of the support bracket according to the invention.

According to an aspect of the invention, the bracket comprises a first and a second bracket portion which are arranged for anchoring the bracket to a wall and for supporting and fixing the equipment to the bracket, respectively, the first and second bracket portions being able to be secured to each other in an operating condition, in which they assume an L-shaped configuration suitable for supporting the equipment, there being defined on the second bracket portion a surface portion which is intended for the supporting contact of the equipment, the surface portion being provided with at least one through-opening which is in the form of an elongate slot, for engaging in a sliding manner with at least one respective screw type member which is intended to anchor the equipment on the corresponding bracket, the screw type member comprising a head and a threaded shank which extends from the head, wherein the screw type member comprises, in the region of the head, a pair of opposite seats, each seat being configured to be connected, with sliding engagement, to a corresponding peripheral edge of the through-opening so that the screw type member is retained in a manner slidingly guided along the opening, thereby preventing the screw type member from falling out of the opening.

Preferably, the through-opening has an elongate formation in a main longitudinal direction and has a widened portion in the region of at least one of the opposite longitudinal ends thereof with such an extent as to allow the insertion of the head of the screw type member through the widened portion of the opening and the sliding engagement of the head with the surface portion of the bracket along the slotted extent of the opening.

Preferably, each of the seats is defined by a first surface and a second surface which are parallel with and spaced apart from each other and which are connected to a third surface, the transverse thickness of the surface portion of the bracket being received between the first surface and the second surface and being abutted by the third surface.

Preferably, the third surface has a planar configuration and the distance between the pair of the third surfaces is selected in such a manner that the head is slidingly guided in terms of translation in the slotted opening without any substantial possibility of rotation about the main axis of the screw type member. Preferably, the head is made from plastics material co-moulded on the threaded shank.

Preferably, the first surface of each seat is defined in a main member of the head and the second surface is defined in a plate-like portion of the head arranged between the main member and the threaded shank.

Preferably, there are provided in the brackets a pair of the slotted through-openings which are aligned at a predetermined distance in the longitudinal development direction.

Preferably, the second bracket portion is made from metal material or plastics material.

### Brief description of the drawings

Additional features and advantages of the invention will be better appreciated from the following detailed description of a number of preferred embodiments thereof which are illustrated by way of non-limiting example with reference to the appended drawings, in which:
- Figure 1 is a perspective view of a first embodiment of a support bracket which is constructed according to the invention,
- Figure 2 is a side view of a detail of the bracket of Figure 1,
- Figure 3 is a plan view of the detail of the bracket of Figure 2,
- Figure 4 is a cross-section along the line IV-IV of Figure 3,
- Figure 5 is a cross-section along the line V-V of Figure 3,
- Figures 6 and 7 are perspective views, drawn to an enlarged scale, of an additional detail of the bracket of the preceding Figures,
- Figure 8 is a side view of the detail shown in Figures 6 and 7,
- Figure 9 is a perspective view of a second embodiment of a bracket which is constructed according to the invention,
- Figures 10 and 11 are perspective views of additional embodiments of a bracket which is constructed according to the invention.

### Preferred embodiments of the invention

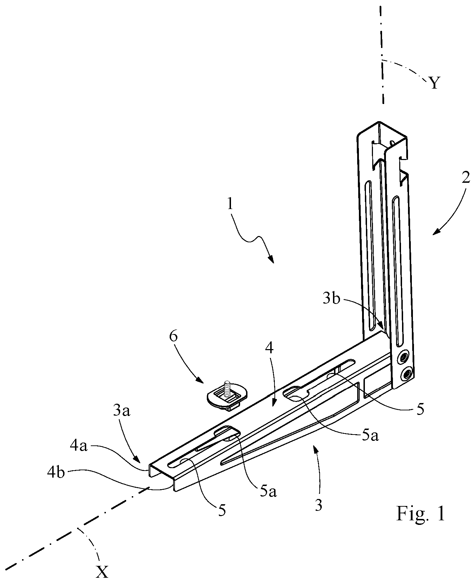

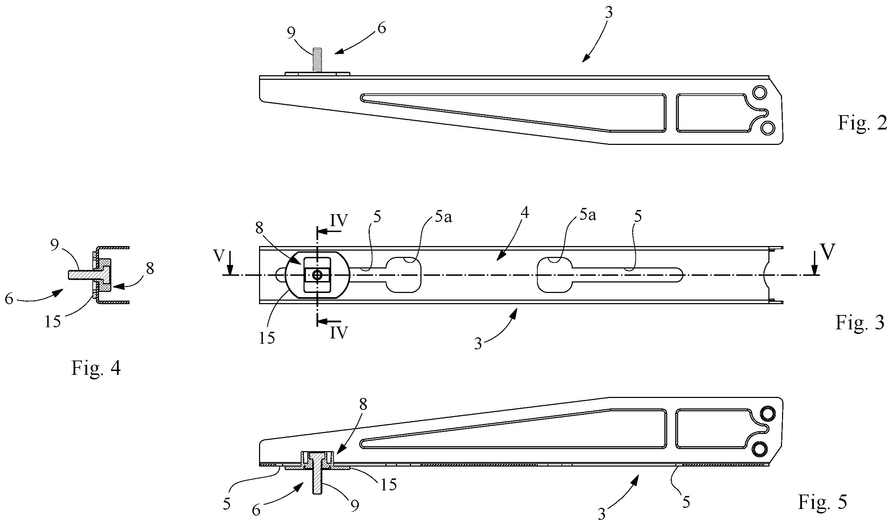

Initially with reference to Figures 1 to 8, there is generally designated 1 a first embodiment of a support bracket for equipment items, typically air-conditioning plant units (not illustrated), which is constructed according to the present invention.

Normally, there is provision for a pair of brackets 1 to be provided in a parallel and spaced-apart relationship with suitable relative spacing in order to define the support and fixing surfaces of the equipment, even if different configurations are possible.

The bracket 1 comprises a first and a second portion which are designated 2 and 3, respectively, and which are configured to be secured to each other at converging ends thereof in order to assume a square configuration which substantially extends in an L-like manner and which is suitable for performing the support function for the equipment.

The securing system between the bracket portions 2, 3 may provide for using locking screws which are engaged in through-holes which are formed, in a corresponding position, on both bracket portions, for example, with the configuration shown in Figure 1. Other blocking systems of the bracket portions or articulation portions with blocking in the extended L-shaped position are possible. The inventive concept forming the basis of the invention is further also applicable to support brackets in which the first portion and second portion 2, 3 are integral with each other, in a one-piece formation of the support bracket. The first bracket portion 2 therefore forms the vertical upright of the bracket which is provided for anchoring it, either directly to the wall or by means of coupling to a guiding cross-member which is in turn fixed to the wall, while the second portion 3 forms the horizontal arm of the bracket which is provided for supporting and fixing the equipment on the bracket.

Each of the bracket portions 2 and 3 extends in a respective main longitudinal extent direction which is designated Y for the bracket portion 2 and X for the bracket portion 3, the bracket portion 3 extending between opposite longitudinal ends 3a, 3b.

There is defined on the second bracket portion 3 a surface portion 4 which extends between the ends 3a, 3b and which is intended to support and anchor the equipment item on the bracket.

The bracket 1 is advantageously made from metal material and is U-shaped in cross-section, wherein the surface portion 4 forms the upper connection wall of the opposite lateral sides which are designated 4a, 4b.

In order to anchor the equipment item to the bracket, the surface portion 4 is further provided with at least one respective through-opening 5 which is in the form of an elongate slot parallel with the direction X for slidingly engaging with at least one screw type locking member which is generally designated 6 and which is provided to lock the equipment item on the corresponding bracket.

In a preferred form, which is shown in the Figures of this embodiment, the surface portion 4 is provided with two openings 5 which are aligned with each other with predetermined spacing in the X direction, each opening being able to be engaged with a corresponding screw type member 6. As a result of their structural identity, only one of the openings 5 will be described in detail below, it therefore being understood that this description may refer equally well to each of the openings provided.

In each opening 5, the elongate slot-like shape which delimits the opening has, at one of the opposite ends of the slot, a widened portion 5a of the opening, the extent of which is such as to allow a head 8 of the screw type member 6 to be inserted and to extend through the opening 5. In an additional embodiment, in accordance with specific requirements, there may be provision for a respective widened portion 5a of the opening to be present in each of the longitudinal ends of the opening 5.

In greater detail, the screw type member 6 is provided with an externally threaded shank 9 which extends from the head 8 and which is provided to be engaged in a screwing manner, for example, by a locking nut (not illustrated) which is suitable for ensuring the locking of the equipment item against the support bracket.

According to a main feature of the invention, the screw type member 6 comprises in the region of the head 8 a pair of opposite seats 10a, 10b, each seat being configured to be connected, with sliding engagement, to a corresponding peripheral edge of the through-opening 5 so that the screw type member is retained in a slidingly guided manner along the opening, thereby preventing the screw type member from falling out of the opening.

In other words, the head 8 of the screw type member is retained in sliding engagement on the surface portion 4 of the bracket, along the slotted extent of the opening.

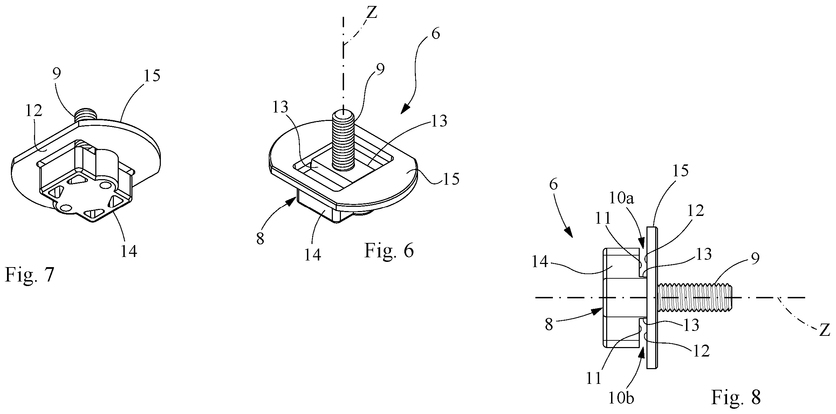

The seats 10a, 10b have a specular and symmetrical formation with respect to a centre plane of symmetry which is defined in Figure 8 as the plane which contains the main axis Z of the screw type member and which is arranged perpendicularly to the plane of the Figure.

In greater detail, each seat 10a, 10b is defined by a first surface and a second surface which are designated 11 and 12, respectively, and which are parallel with each other and which are spaced apart from and connected to a third surface 13. There remains received between the surfaces 11 and 12 the transverse thickness of the surface portion 4 of the bracket, which is further abutted by the corresponding surface 13. The spacing between the opposite surfaces 11 and 12 is selected to have such an extent that the surface portion 4 is received therebetween with a limited amount of connection play which allows sliding engagement with relative sliding between the connected surfaces. Each surface 13 has a planar configuration and the spacing between the pair of the surfaces 13 is selected so that the head 8 is slidingly guided with substantially translational movement along the slotted opening 5 without any substantial possibility of rotation of the screw type member 6 about the individual axis Z.

The head 8 of the screw type member is advantageously formed as a co-moulded member on the threaded shank 9. In one embodiment, there may be provision for using a screw, the threaded shank 9 of which extends from a metal head, of conventional shape, for example, with a polygonal profile, and on which the head 8 made of plastics material is co-moulded.

In the embodiment shown in Figure 1, the head 9 of the screw type member has a main member 14 which has an approximately parallelepipedal formation and on which the respective surfaces 11 are defined. The surfaces 12 are defined on a plate-like portion 15 of the head which is arranged between the member 14 and the shank 9.

During operation, the screw type member 6 is connected to the bracket by inserting the head 8 from above inside the widened portion 5a of the slotted opening 5. Once the head is inserted, it is moved in sliding engagement along the slot (with the surface portion 4 received in and abutted by the seats 10a, 10b) without consequently leaving the opening 5 at the bottom. The head of the screw is therefore retained in position inside the slotted opening with freedom to move in a sliding manner in translation along the slotted opening but without being able either to be removed from the slot or rotating about the individual axis Z. In this manner, as long as the screw type member is not locked in a screwed manner with the locking nut, in order to lock the equipment item on the support bracket, the screw type member remains retained inside the slotted opening with the threaded shank projecting at the upper side and the head retained in sliding engagement with the surface portion 4 of the bracket.

Once the position preselected by the fitter for locking the equipment item has been reached, the locking nut is screwed on the threaded shank in order to complete the locking action. In this step, the manoeuvring wrench is applied only to the nut because the head is blocked in terms of rotation about the individual axis Z as a result of the effect of the connection with respect to the surface portion 4 of the bracket.

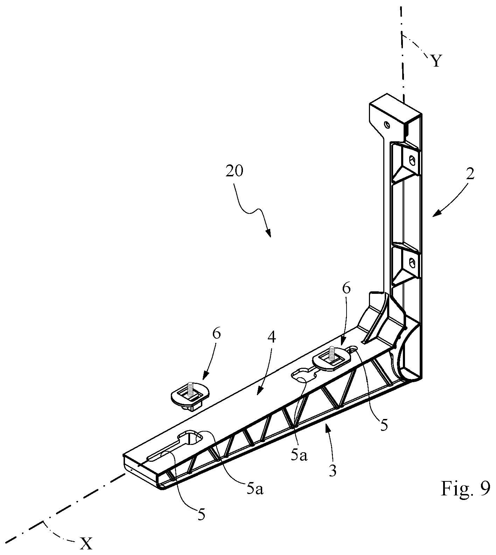

Figure 9 shows a second embodiment of the invention, in which similar details to those of the preceding embodiment are denoted with the same reference numerals.

This embodiment differs from the preceding one mainly in that the support bracket, which is generally designated 20, is made from plastics material, for example, with moulding technology, wherein the two bracket portions 2, 3 are integrated in a one-piece structure.

The surface portion 4 is formed with a transverse thickness which is suitable for connection to the head of the screw type member 6, the formation of which reflects the one described in relation to the preceding embodiment.

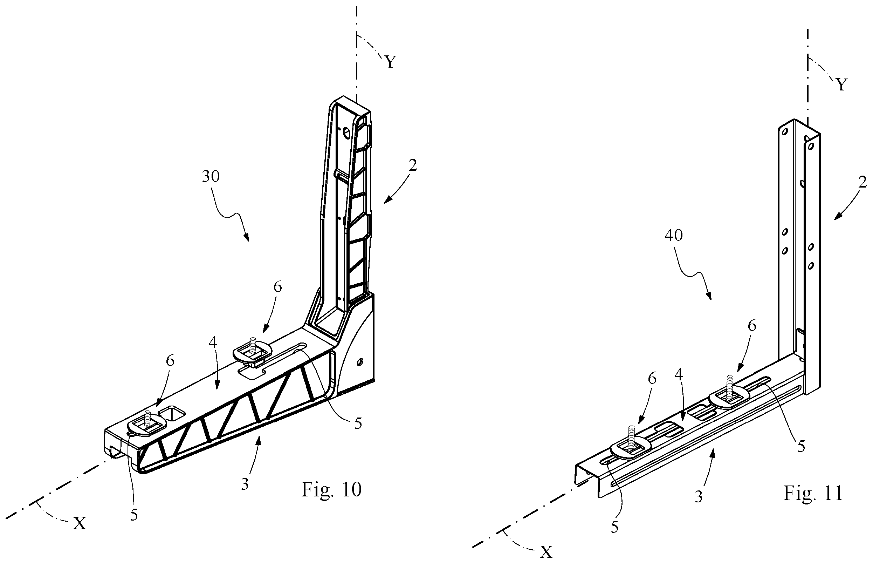

Figure 10 shows a further variant, designated 30, of the support bracket which is provided for using screw type locking members as described in the preceding embodiments. According to this variant, the bracket portions 2 and 3 are constructed to be structurally independent of each other and there is provided an interlocking connection, in which the portion 3 is provided with a tubular end seat, inside which the bracket portion 2 is retained. The bracket portions 2 and 3 are advantageously made from plastics material.

Figure 11 shows a further variant, designated 40, of the bracket in which the two portions 2 and 3 are constructed as separate portions, preferably made from metal material, and are configured to be secured to each other, in the L-shaped formation, by means of welding connection. In both the variants of Figures 10 and 11, the surface portion 4 of the bracket portion 3 is constructed to have a transverse thickness which is suitable for connection with respect to the head of the screw type member 6, the formation of which reflects the one described in the preceding embodiments.

The invention thereby achieves the objectives set out, affording the advantages set out with respect to the known solutions.

A main advantage is that, according to the invention, the screw type locking members can be retained in position in the slotted through-openings of the brackets until the time when the respective locking nuts are screwed without requiring any intervention by the fitter, preventing the screws from falling out of the slot-like openings, thereby making the locking operations easier for the fitter.

Another advantage is that, in the brackets according to the invention, the screw type locking members are slidingly retained in the slotted openings, before the locking, without the screw being able to rotate freely about the individual axis, making the locking operations of the locking nuts against the brackets easier for the fitter.

Another advantage is that, in the support bracket according to the invention, the screw type members can be positioned on the bracket without any risk of leaving or falling out, already in a preliminary step with respect to being fixed to the wall, facilitating and making more convenient the subsequent operations of anchoring the equipment item, with a substantial improvement of the steps of installation, in particular for wall-mounted installation of the equipment items at significant heights.

## Claims

1. A support bracket for equipment, in particular units for air-conditioning plants, comprising a first bracket portion and a second bracket portion (2, 3) which are arranged for anchoring the bracket to a wall and for supporting and fixing the equipment to the bracket, respectively, the first and second bracket portions (2, 3) being able to be secured to each other in an operating condition, in which they assume an L-shaped configuration suitable for supporting the equipment, there being defined on the second bracket portion (3) a surface portion (4) which is intended for the supporting contact of the equipment, the surface portion (4) being provided with at least one through-opening (5) which is in the form of an elongate slot, and at least one respective screw type member (6) which is intended to anchor the equipment on the corresponding bracket, the at least one screw type member (6) comprising a head (8) and a threaded shank (9) which extends from the head, wherein said elongate slot is suitable for engaging in a sliding manner with the at least one respective screw type member (6), **characterised in that** the screw type member (6) comprises, in the region of the head (8), a pair of opposite seats (10a, 10b), each seat being configured to be connected, with sliding engagement, to a corresponding peripheral edge of the through-opening (5) so that the screw type member (6) is retained in a manner slidingly guided along the opening (5), thereby preventing the screw type member (6) from falling out of the opening.

2. A support bracket according to claim 1, wherein the through-opening (5) has an elongate formation in a main longitudinal direction and has a widened portion (5a) in the region of at least one of the opposite longitudinal ends thereof with such an extent as to allow the insertion of the head (8) of the screw type member (6) through the widened portion (5a) of the opening and the sliding engagement of the head (8) with the surface portion of the bracket along the slotted extent of the opening (5).

3. A support bracket according to claim 1 or 2, wherein each of the seats (10a, 10b) is defined by a first surface and a second surface (11, 12) which are parallel with and spaced apart from each other and which are connected to a third surface (13), the transverse thickness of the surface portion (4) of the bracket being received between the first surface and the second surface (11, 12) and being abutted by the third surface (13).

4. A support bracket according to claim 3, wherein the third surface (13) has a planar configuration and the distance between the pair of the third surfaces (13) is selected in such a manner that the head (8) is slidingly guided in terms of translation in the slotted opening (5) without any substantial possibility of rotation about the main axis of the screw type member (6).

5. A support bracket according to any one of the preceding claims, wherein the head (8) is made from plastics material co-moulded on the threaded shank (9).

6. A support bracket according to claim 3 or 4, wherein the first surface (11) of each seat is defined in a main member (14) of the head (8) and the second surface (12) is defined in a plate-like portion (15) of the head (8) arranged between the main member (14) and the threaded shank (9).

7. A support bracket according to any one of the preceding claims, wherein there are provided a pair of the slotted through-openings (5) which are aligned at a predetermined distance in the longitudinal development direction.

8. A support bracket according to any one of the preceding claims, wherein the second bracket portion (3) is made from metal material or plastics material.

## Patentansprüche

1. Halterung für Vorrichtung, insbesondere Einheiten für Klimaanlagen, umfassend einen ersten Halterungsabschnitt und einen zweiten Halterungsabschnitt (2, 3), die jeweils zum Verankern der Halterung an einer Wand bzw. zum Stützen und Befestigen der Vorrichtung an der Stütze angeordnet sind, wobei der erste und zweite Halterungsabschnitt (2, 3) in einem Betriebszustand aneinander befestigbar sind, in dem sie eine L-förmige Konfiguration annehmen, die zum Stützen der Vorrichtung geeignet ist, wobei auf dem zweiten Halterungsabschnitt (3) ein Oberflächenabschnitt (4) definiert ist, der für den stützenden Kontakt der Vorrichtung vorgesehen ist, wobei der Oberflächenabschnitt (4) mit mindestens einer Durchgangsöffnung (5) vorgesehen ist, die die Form eines länglichen Schlitzes hat, und mit mindestens einem jeweiligen schraubenartigen Element (6), das zum Verankern der Vorrichtung an der entsprechenden Halterung vorgesehen ist, wobei das mindestens eine schraubenartige Element (6) einen Kopf (8) und eine gewindetragende Stange (9) umfasst, die sich von dem Kopf erstreckt, wobei der längliche Schlitz zum schiebbaren Eingreifen mit dem mindestens einen jeweiligen schraubenartigen Element (6) geeignet ist, **dadurch gekennzeichnet, dass** das schraubenartige Element (6) im Bereich des Kopfes (8) ein Paar von gegenüberliegenden Sitzen (10a, 10b) umfasst, wobei jeder Sitz eingerichtet ist, mit einem entsprechenden Umfangsrand der Durchgangsöffnung (5) mit schiebbarem Eingriff verbunden zu sein, sodass das schraubenartige Element (6) in einer entlang der Öffnung verschiebbar geführten Weise gehalten ist, wodurch das schraubenartige Element (6) daran gehindert is, aus der Öffnung herauszufallen.

2. Stützhalterung nach Anspruch 1, wobei die Durchgangsöffnung (5) eine längliche Form in einer Hauptlängsrichtung hat und im Bereich mindestens eines der gegenüberliegenden Längsenden davon einen verbreiterten Abschnitt (5a) hat, der so groß ist, dass das Einsetzen des Kopfes (8) des schraubenartigen Elements (6) durch den verbreiterten Abschnitt (5a) der Öffnung und den schiebbaren Eingriff des Kopfes (8) mit dem Oberflächenabschnitt der Halterung entlang der geschlitzten Erstreckung der Öffnung (5) möglich ist.

3. Stützhalterung nach Anspruch 1 oder 2, wobei jeder der Sitze (10a, 10b) durch eine erste Oberfläche und eine zweite Oberfläche (11, 12) definiert ist, die parallel zueinander und voneinander beabstandet sind und die mit einer dritten Oberfläche (13) verbunden sind, wobei die Querstärke des Oberflächenabschnitts (4) der Halterung zwischen der ersten Oberfläche und der zweiten Oberfläche (11, 12) erhalten ist und an die dritte Oberfläche (13) anliegt.

4. Stützhalterung nach Anspruch 3, wobei die dritte Fläche (13) eine ebene Konfiguration hat und der Abstand zwischen dem Paar der dritten Flächen (13) so gewählt ist, dass der Kopf (8) in der geschlitzten Öffnung (5) ohne wesentliche Möglichkeit vom Drehen um die Hauptachse des schraubenartigen Elements (6) translatorisch schiebbar geführt ist.

5. Stützhalterung nach einem der vorstehenden Ansprüche, wobei der Kopf (8) aus Kunststoffmaterial hergestellt ist, das an der gewindetragenden Stange (9) mitgeformt ist.

6. Stützhalterung nach Anspruch 3 oder 4, wobei die erste Oberfläche (11) jedes Sitzes in einem Hauptelement (14) des Kopfes (8) definiert ist und die zweite Oberfläche (12) in einem plattenartigen Abschnitt (15) des Kopfes (8) definiert ist, der zwischen dem Hauptelement (14) und der gewindetragenden Stange (9) angeordnet ist.

7. Stützhalterung nach einem der vorstehenden Ansprüche, wobei ein Paar der geschlitzten Durchgangsöffnungen (5) vorgesehen ist, die in Längserstreckungsrichtung mit einem vorbestimmten Abstand ausgerichtet sind.

8. Stützhalterung nach einem der vorstehenden Ansprüche, wobei der zweite Halterungsabschnitt (3) aus Metall-Material oder Kunststoff-Material hergestellt ist.

## Revendications

1. Support de soutien pour des équipements, en particulier des unités pour des installations de climatisation, comprenant une première portion de support et une deuxième portion de support (2, 3) qui sont disposées pour ancrer la support à un mur et pour soutenir et fixer l'équipement au support, respectivement, la première et la deuxième portion de support (2, 3) pouvant être fixées l'une à l'autre à l'état de fonctionnement, dans lequel elles prennent une configuration en forme de L adaptée au support de l'équipement, la deuxième portion du support (3) présentant une surface (4) destinée à un contact de soutien de l'équipement, la surface (4) étant pourvue d'au moins une ouverture traversante (5) ayant la forme d'une fente allongée, et au moins un élément de type vis (6) destiné à ancrer l'équipement sur le support correspondant, l'élément de type vis (6) comprenant une tête (8) et une tige filetée (9) qui s'étend à partir de la tête, dans lequel ladite fente allongée est adaptée pour s'engager de manière coulissante avec l'élément de type vis (6), **caractérisé en ce que** l'élément de type vis (6) comprend, dans la région de la tête (8), une paire de sièges =- opposés (10a, 10b), chaque siège étant configuré pour être relié, par engagement coulissant, à un bord périphérique correspondant de l'ouverture traversante (5), de sorte que l'élément de type vis (6) est retenu d'une manière guidée coulissante le long de l'ouverture (5), empêchant ainsi l'élément de type vis (6) de tomber hors de l'ouverture.

2. Support de soutien selon la revendication 1, dans lequel l'ouverture traversante (5) a une forme allongée dans une direction longitudinale principale et a une portion élargie (Sa) dans la région d'au moins une de ses extrémités longitudinales opposées, de manière à permettre l'insertion de la tête (8) de l'élément de type vis (6) à travers la portion élargie (Sa) de l'ouverture et l'engagement coulissant de la tête (8) avec la portion superficielle du support le long de la portion fendue de l'ouverture (5).

3. Support de soutien selon la revendication 1 ou 2, dans lequel chacun des sièges (10a, 10b) est défini par une première surface et une deuxième surface (11, 12) qui sont parallèles et espacées l'une de l'autre et qui sont reliées à une troisième surface (13), l'épaisseur transversale de la portion de surface (4) du support étant reçue entre la première surface et la deuxième surface (11, 12) et étant en butée contre la troisième surface (13).

4. Support de soutien selon la revendication 3, dans lequel la troisième surface (13) a une configuration plane et la distance entre la paire de troisièmes surfaces (13) est choisie de manière à ce que la tête (8) soit guidée par glissement en termes de translation dans l'ouverture fendue (5) sans aucune possibilité substantielle de rotation autour de l'axe principal de l'élément de type vis (6).

5. Support de soutien selon l'une quelconque des revendications précédentes, dans lequel la tête (8) est en matière plastique co-moulée sur la tige filetée (9).

6. Support de soutien selon la revendication 3 ou 4, dans lequel la première surface (11) de chaque siège est définie dans un élément principal (14) de la tête (8) et la deuxième surface (12) est définie dans une portion en forme de plaque (15) de la tête (8) disposée entre l'élément principal (14) et la tige filetée (9).

7. Support de soutien selon l'une quelconque des revendications précédentes, dans lequel il est prévu une paire d'ouvertures traversantes fendues (5) qui sont alignées à une distance prédéterminée dans la direction de développement longitudinal.

8. Support de soutien selon l'une des revendications précédentes, dans lequel la deuxième portion du support (3) est fabriquée en métal ou en plastique.
